(19) Europäisches Patentamt / European Patent Office / Office européen des brevets

(11) **EP 2 238 443 B1**

(12) **EUROPÄISCHE PATENTSCHRIFT**

(45) Veröffentlichungstag und Bekanntmachung des Hinweises auf die Patenterteilung:
**25.07.2012 Patentblatt 2012/30**

(51) Int Cl.:
*G01N 29/22* *(2006.01)*      *G01N 29/24* *(2006.01)*
*G01N 29/06* *(2006.01)*      *G01N 29/44* *(2006.01)*

(21) Anmeldenummer: **09703934.1**

(86) Internationale Anmeldenummer:
**PCT/EP2009/050792**

(22) Anmeldetag: **23.01.2009**

(87) Internationale Veröffentlichungsnummer:
**WO 2009/092803 (30.07.2009 Gazette 2009/31)**

(54) **Vorrichtung und Verfahren zur zerstörungsfreien Prüfung eines Prüflings mittels Ultraschall-TOFD-Technik**

Device and method for the non-destructive testing of a test object by way of ultrasound TOFD technology

Procédé et dispositif destinés au contrôle non destructif d'un échantillon selon la méthode TOFD par ultrasons

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **24.01.2008 DE 102008005971**

(43) Veröffentlichungstag der Anmeldung:
**13.10.2010 Patentblatt 2010/41**

(73) Patentinhaber: **GE Sensing & Inspection Technologies GmbH**
**50354 Hürth (DE)**

(72) Erfinder: **ROYE, Werner**
**50374 Ertstadt (DE)**

(74) Vertreter: **Bauer Vorberg Kayser**
**Patentanwälte**
**Goltsteinstrasse 87**
**50968 Köln (DE)**

(56) Entgegenhaltungen:
WO-A-97/40373          WO-A1-2008/010712
NL-C2- 1 032 186      US-A- 4 718 277
US-A1- 2007 000 328

- BISBEE ET AL: "Enhanced methodologies used for the assessment of high-temperature header girth welds" INTERNATIONAL JOURNAL OF PRESSURE VESSELS AND PIPING, ELSEVIER SCIENCE PUBLISHERS, BARKING, GB, Bd. 83, Nr. 11-12, 1. November 2006 (2006-11-01), Seiten 835-845, XP025103010 ISSN: 0308-0161 [gefunden am 2006-11-01]
- HOLMES C ET AL: "Post-processing of the full matrix of ultrasonic transmit-receive array data for non-destructive evaluation" NDT & E INTERNATIONAL, BUTTERWORTH-HEINEMANN, OXFORD, GB, Bd. 38, Nr. 8, 1. Dezember 2005 (2005-12-01), Seiten 701-711, XP025390434 ISSN: 0963-8695 [gefunden am 2005-12-01]

**Beschreibung**

Die Erfindung betrifft eine Vorrichtung zur zerstörungsfreien Ultraschallprüfung eines Prüflings nach TOFD-Technik. Das TOFD-Verfahren (Englisch: time of flight diffraction, Deutsch: Laufzeit-Beugung) ist ein Ultraschall-Prüfverfahren, bei dem nicht wie üblich die reflektierten, sondern vor allem die Beugungssignale, die von den Fehlerrändern im Prüflingsmaterial ausgesandt werden, aufgezeichnet und beurteilt werden. Die Prüfung an sich erfolgt meist teilmechanisiert mit einem Paar aus Winkelprüfköpfen, mit einem Ultraschallsender und einem Ultraschallempfänger, das entlang des Prüflings oder insbesondere entlang einer Schweißnaht geführt wird. Die Köpfe werden in V-Durchschallung angeordnet: einer zum "Beschallen" des zu prüfenden Volumens des Prüflings und einer zum Empfangen der Beugungssignale möglicher Inhomogenitäten (Fehler). Üblicherweise kommen Longitudinalwellen zum Einsatz. Das Verfahren ist vergleichsweise einfach und schnell in der Anwendung. Die Prüfergebnisse werden nachvollziehbar, in Form von B-Bildern (Längsschnitt mit Tiefenmaßstab) dokumentiert. Das TOFD-Verfahren hat Eingang in die Britische Norm BS7706 (1993) und - was die Schweißnahtuntersuchung betrifft - in die europäische Norm EN14751 gefunden.

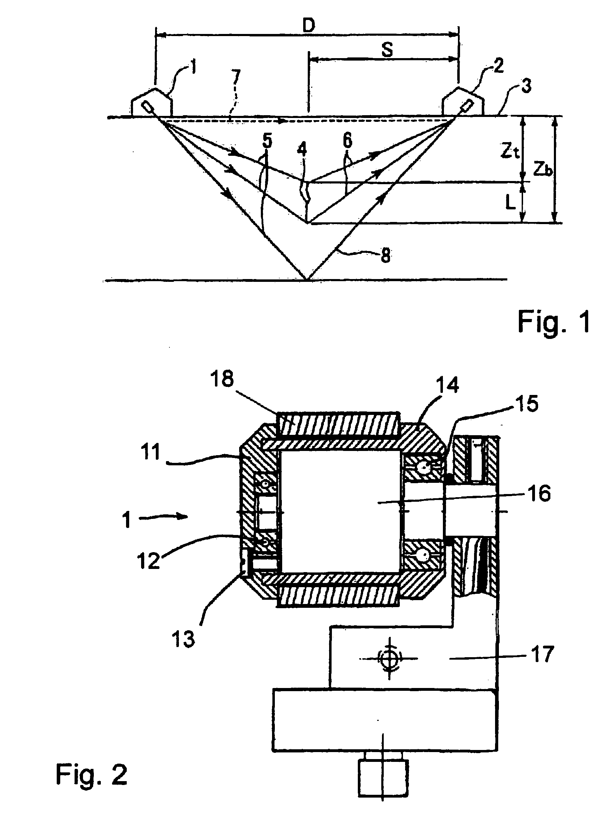

FIG. 1 ist eine schematische Darstellung zur Erläuterung des Messprinzips nach TOFD-Technik. Die Vorrichtung nach TOFD-Technik umfasst einen Ultraschallsender 1 zum Erzeugen eines Ultraschallfeldes und einen Ultraschallempfänger 2 zum Empfang des den Prüfling 3 wenigstens teilweise durchsetzenden Ultraschallfeldes. Während der Messung sind der Ultraschallsender 1 und der Ultraschallempfänger 2, die in ein Winkelprüfkopf oder ein Rollenprüfkopf integriert sind, auf der Oberfläche des Metallprüflings 3 angeordnet. Der Prüfling 3 weist einen zu detektierenden Riss 4 (Defekt), beispielsweise in einer Schweißnaht des Prüflings 3, in der Mitte zwischen Ultraschallsender 1 und Ultraschallempfänger 2 auf. Eine Ultraschallfeld wird schräg in Richtung des Risses 4 im Prüfling 3 durch den Ultraschallsender 1 abgestrahlt und die gebeugten Wellen 6 von sowohl der oberen als auch unteren Kante des Risses werden durch den Ultraschallempfänger 2 für die Messung der Laufzeit der jeweiligen Ultraschallwelle detektiert. Zur vollständigen Erfassung des Prüflingsvolumens und nicht nur des Risses 4 ist erwünscht, wenigstens 4 Schallstrahlen zu berücksichtigen: die Lateralwelle 7, die an der Rückwand des Prüflings reflektierte Welle 8 als auch die an der oberen und unteren Spitze des Risses gebeugten Schallstrahlen 6. Dabei lässt sich beispielsweise die Ausdehnung L des Risses 4 durch die Messung der Differenz der Laufzeit von der oberen und unteren Spitze des Risses bestimmen. Die TOFD-Technik zeichnet sich dadurch aus, dass sie Schäden, insbesondere auch räumlich gerichtete Schäden, mit hoher Zuverlässigkeit erkennt. Die Beurteilung eines zweidimensionalen TOFD-Bilds ist vergleichsweise einfach, ähnlich wie die Beurteilung eines Röntgenbilds. Darüber hinaus bietet sie die Möglichkeit, die Tiefenlage und die Tiefenausdehnung von Fehlern quantitativ zu erfassen, was mit Röntgenuntersuchungen nicht - der zumindest nicht ohne weiteres- möglich ist. Auch der Nachweis von flächigen Fehlern und von Flankenbindefehlern ist mittels TOFD-Technik gut möglich, was mittels Röntgenuntersuchungen nur unter bestimmten Einstrahlrichtungen gelingt.

Es stellt sich jedoch das Problem bei der TOFD-Technik, dass möglichst das ganze Prüflingsvolumen in dem Bereich zwischen Ultraschallsender 1 und dem Ultraschallempfänger 2 erfasst werden sollte, um so auch Schäden im Bereich der Oberfläche als auch der Rückwand des Prüflings 3 zu detektieren. Um sowohl die Oberfläche des Prüflings mit Hilfe der Lateralwelle 7 als auch die Rückwand des Prüflings 3 mit der Rückwandwelle 8 zu erfassen, bedarf es in dieser Raumrichtung einer möglichst divergenten Schallabstrahlung durch den Ultraschallsender 1. Gleichzeitig sollte die Schallabstrahlung in dem abgestrahlten Ultraschallfeld möglichst homogen sein. Die niederländische Patentschrift NL 1 032 186 C beschreibt eine zerstörungsfreie Ultraschallprüfung eines Prüflings nach der TOFD-Technik, wobei durch die phasenverschobene Ansteuerung der Einzelschwinger eines Gruppenstrahlersensors (phased array) ein divergentes Ultraschallfeld erzeugt wird. Ferner ist bei bestimmten Anwendungen, bei denen es auf eine hohe Ortsauflösung ankommt, beispielsweise in der zur Oberfläche des Prüflings parallelen Richtung, ein weniger divergentes Schallfeld erwünscht. Ein stark divergentes Schallfeld kann durch einen sehr kleinen Schwingerdurchmesser des Ultraschallsenders erreicht werden, da für den Divergenzwinkel β folgende Abhängigkeit von der Wellenlänge λ und dem Schwingerdurchmesser D der Abstrahlfläche gilt:

$$\beta \propto \arcsin\left(\lambda/D\right)$$

Dabei ist jedoch nachteilig, dass mit abnehmendem Schwingerdurchmesser D gleichzeitig der von dem Ultraschallsender übertragene Schalldruck abnimmt, womit sich die Empfindlichkeit der Prüfung verringert.

Es ist daher Aufgabe der vorliegenden Erfindung, eine Vorrichtung sowie ein zugehöriges Verfahren zur Ultraschallprüfung eines Prüflings unter Auswertung des den Prüfling teilweise durchsetzenden Ultraschallfeldes mit TOFD-Technik bereitzustellen, wobei die Abstrahlcharakteristik des verwendeten Ultraschallsenders verbessert ist. Diese Aufgabe wird durch eine Vorrichtung gemäß Anspruch 1 und durch ein Verfahren gemäß Anspruch 10 gelöst. Vorteilhafte Ausgestaltungen sind jeweils Gegenstand der abhängigen Ansprüche.

Die erfindungsgemäße Vorrichtung zur zerstörungsfreien Ultraschallprüfung eines Prüflings gemäβ Anspruch 1 umfasst wenigstens einen Ultraschallsender, beispielsweise einen Piezoschwinger, mit jeweils wenigstens einer dem Prüfling zugewandten Abstrahlfläche zur Erzeugung eines den Prüfling wenigstens teilweise durchdringenden Ultraschallfeldes. Obwohl ein Piezoschwinger in der Regel mehrere Abstrahlflächen aufweist, wird erfindungsgemäß diejenige abstrahlende Fläche als Abstrahlfläche bezeichnet, die ein auf den Prüfling gerichtetes Ultraschallfeld erzeugt. Typischerweise liegt die Frequenz des Ultraschallfeldes im Bereich von 0,5 - 25 MHz. Handelt es sich um mehrere Ultraschallsender, können diese parallel oder unabhängig voneinander zur Erzeugung des Ultraschallfeldes angesteuert werden. Erfindungsgemäß ist ein Ultraschallempfänger zur wenigstens teilweisen Erfassung des Ultraschallfeldes und zur Umwandlung in ein elektrisches Messsignal vorgesehen. In einer bevorzugten Ausführungsform sind der Ultraschallempfänger und der Ultraschallsender gleich aufgebaut. Es ist ferner eine Auswerteeinheit zur Auswertung des Messsignals in TOFD-Technik vorgesehen. Das dieser Technik zugrunde liegende Prinzip wurde eingangs beschrieben. Diesbezüglich wird darüber hinaus auf die Britische Norm BS7706 (1993) und - was die Schweißnahtuntersuchung betrifft - auf die europäische Norm EN14751 verwiesen, die hiermit durch Bezugnahme umfasst sind.

Erfindungsgemäß ist der Ultraschallsender in dem durch die Abstrahlfläche vorgegebenen Bereich in wenigstens einer ersten Richtung konvex gekrümmt. Durch die konvexe Krümmung wird vergleichsweise einfach ein divergentes Ultraschallfeld erzeugt. Dadurch kann in der entsprechenden Richtung eine vergleichsweise breite Erfassung des Prüflings erfolgen. Bei entsprechender Anordnung der Abstrahlfläche kann so bei dickwandigen Schweißverbindungen auch gleichzeitig die Lateralwelle und die Rückwandwelle im Prüfling erzeugt und in der TOFD-Technik ausgewertet werden, was die Detektion oberflächennaher und rückwandnaher Schäden im Prüfling ermöglicht. Durch die Verwendung eines konvex gekrümmten Ultraschallsenders werden die zur Erzeugung eines divergenten Schallfeldes erforderliche Verkleinerung und der damit einhergehende Nachteil des Schalldruckverlustes und des Empfindlichkeitsverlustes der Messvorrichtung vorteilhaft umgangen. Folglich kann die Abstrahlfläche bei gleichem Divergenzwinkel gegenüber einer ebenen Abstrahlfläche groß ausfallen, wodurch der davon abgestrahlte Schalldruck und damit die Empfindlichkeit der Prüfvorrichtung gesteigert werden kann.

Bevorzugt wird für die meisten Anwendungen die konvexe Krümmung möglichst gleichmäßig gewählt sein, um ein möglichst homogen verteiltes divergentes Schallfeld zu erzeugen. Dadurch ist gewährleistet, dass die Schalldruckverteilung über einen weiten Bereich näherungsweise konstant ist und es beispielsweise keine Überbewertung der mittleren Zone und einer Unterbewertung der oberflächennahen und der rückwandnahen Zone des Prüflings kommt.

In einer weiteren vorteilhaften Ausgestaltung der erfindungsgemäßen Vorrichtung ist der Ultraschallsender in dem durch die Abstrahlfläche vorgegebenen Bereich in einer zur ersten Richtung senkrechten, zweiten Richtung nicht gekrümmt. Dadurch wird in dieser Richtung die hohe Ortsauflösung des erfindungsgemäßen Verfahrens gegenüber einer ebenen Abstrahlfläche beibehalten. Alternativ wird durch eine konkave Krümmung in dieser Richtung eine Fokussierung des Ultraschallfeldes und damit eine hohe Ortsauflösung erreicht. Insgesamt betrachtet ergibt sich durch die konvexe Krümmung in der ersten Richtung und die konkave Krümmung in der zweiten, dazu senkrechten Richtung eine Abstrahlfläche, die wie eine so genannte Sattelfläche geformt ist. Bevorzugt ist die Abstrahlfläche so angeordnet, dass die zweite Richtung im Wesentlichen in Längsrichtung der Schweißnaht und damit parallel zur Oberfläche des Prüflings ist, um in dieser Richtung die hohe Ortsauflösung zu erreichen.

Bevorzugt ist die Abstrahlfläche weiterhin so angeordnet, dass die erste Richtung zur Oberfläche des Prüflings geneigt ist.

Zur Erleichterung der Herstellung des Ultraschallsenders mit gekrümmter Abstrahlfläche wird dieser im Wesentlichen aus einer in wenigstens eine Richtung gekrümmten Platte ausgebildet.

Bevorzugt ist der Ultraschallsender in einen Winkelprüfkopf eingebaut. Der Winkelprüfkopf wird beispielsweise mittels Wasser als Kopplungsflüssigkeit reflexionsarm an die Oberfläche des Prüflings angekoppelt.

Alternativ ist der Ultraschallsender in einen Rollenwinkelprüfkopf eingebaut. Ein derartiger Rollenprüfkopf ist beispielsweise in der DE 10062 722 A1 offenbart, deren Inhalt hiermit durch Bezugnahme umfasst ist. Ein Rollenprüfkopf weist den Vorteil auf, dass zur Anbindung des Rollenprüfkopfs an den Prüfling keine Kopplungsflüssigkeit erforderlich ist, die die Oberflächenbeschaffenheit des Prüflings beeinträchtigen könnte und/oder nach dem Prüfvorgang entfernt werden muss. Zudem sorgt der Rollenprüfkopf für eine besonders gleichmäßige Ankopplung.

Erfindungsgemäß dringt das Ultraschallfeld über einen an die Abstrahlfläche angekoppelten, zumeist im Wesentlichen keilförmigen Vorlaufkörper, bevorzugt aus Acrylat, bevorzugter Methacrylat, beispielsweise aus Plexiglas®, in den Prüfling ein. Für einen reflexionsarmen Übergang in den Vorlaufkörper im Bereich der Abstrahlfläche, d.h. seiner ultraschallsenderseitigen Ankopplungsfläche, ist er dort komplementär ausgestaltet. Der Ultraschallsender, beispielsweise der Piezoschwinger, ist zum Beispiel auf den Vorlaufkörper aufgeklebt.

Erfindungsgemäß weist der Ultraschallsender zur Erzeugung des Ultraschallfeldes eine piezo-elektrische Polyvinyldifluoridfolie (PVDF-Folie), beispielsweise mit einer Dicke von $20\mu$m,

oder ein piezoelektrisches Kompositmaterial auf, beispielsweise aus piezoelektrischer Keramik in einer Polymermatrix. Aufgrund der herstellungsbedingten Gradienten in ihren Materialeigenschaften ist das von einem Kompositschwinger abgestrahlte Ultraschallfeld sehr breitbandig und gewährleistet so ein hohes Auflösungsvermögen bei der Prüfung. Ein derartiger Schwinger weist zudem wegen seiner geringen akustischen Impedanz einen hohen Energietransfer, das heißt einen hohen Schalldruck, auf. Aufgrund einer starken inhärenten Dämpfung werden gleichzeitig kurze Nachschwingzeiten erreicht. Durch die Polymermatrix ist der Kompositschwinger leicht in die gewünschte gekrümmte Form biegbar oder durch Gie-ßen herzustellen.

Sowohl ein auf einer PVDF-Folie basierender Ultraschallwandler als auch ein auf einem Kompositeschwinger basierender Ultraschallwandler liefern breitbandige, d.h. zeitlich sehr kurze Ultraschallpulse. Dies erhöht die axiale Auflösung des Verfahrens und damit die Fehlernachweisempfindlichkeit im Ober- bzw. Unterflächennahen Bereich.

Die Erfindung betrifft ebenso ein Verfahren zur zerstörungsfreien Ultraschallprüfung eines Prüflings mit einer Vorrichtung gemäß einer der zuvor beschriebenen Ausführungsformen. Das erfindungsgemäße Verfahren gemäß Anspruch 8 umfasst:

- Erzeugen eines den Prüfling wenigstens teilweise durchdringenden Ultraschallfeldes mittels eines Ultraschallsenders mit jeweils einer dem Prüfling zugewandten Abstrahlfläche;

- wenigstens teilweises Erfassen des Ultraschallfeldes und Umwandeln in ein elektrisches Messsignal mittels wenigstens eines Ultraschallempfängers, und

- Auswerten des Messsignals in TOFD-Technik mittels einer Auswerteeinheit.

Erfindungsgemäß ist der Ultraschallsender in dem durch die Abstrahlfläche vorgegebenen Bereich in wenigstens einer ersten Richtung konvex gekrümmt. Durch die konvexe Krümmung wird vergleichsweise einfach ein divergentes Ultraschallfeld erzeugt. Dadurch kann in der entsprechenden Richtung eine vergleichsweise breite Erfassung des Prüflings erfolgen. Bei entsprechender Anordnung der Abstrahlfläche kann so eine Lateralwelle und eine Rückwandwelle im Prüfling erzeugt und in der TOFD-Technik ausgewertet werden, was die Detektion oberflächennaher und rückwandnaher Schäden im Prüfling ermöglicht. Durch die Verwendung eines konvex gekrümmten Ultraschallsenders werden die zur Erzeugung eines divergenten Schallfeldes erforderliche Verkleinerung und der damit einhergehende Nachteil des Schalldruckverlustes und des Empfindlichkeitsverlustes der Messvorrichtung vorteilhaft umgangen. Folglich kann die Abstrahlfläche bei gleichem Divergenzwinkel gegenüber einer ebenen Abstrahlfläche groß ausfallen, wodurch der davon abgestrahlte Schalldruck und damit die Empfindlichkeit der Prüfvorrichtung gesteigert werden kann.

Bevorzugt wird das Verfahren unter Bewegung wenigstens des Ultraschallsenders, bevorzugt unter simultaner Bewegung des Ultraschallsenders und des Ultraschallempfängers entlang des Prüflings durchgeführt. Dadurch kann der Prüfling schnell geprüft werden.

Bevorzugt wird das erfindungsgemäße Verfahren zur Prüfung von einer im Prüfling vorgesehenen Schweißnaht verwendet. Das Verfahren eignet sich besonders für Schweißnähte, da diese den Prüfling in seiner Dickenrichtung im Allgemeinen voll-ständig durchziehen. Aufgrund des divergenten Ultraschallfeldes und bei entsprechender Anordnung der Abstrahlfläche kann so eine Lateralwelle und eine Rückwandwelle im Prüfling erzeugt und in der TOFD-Technik ausgewertet werden, was eine Prüfung der gesamten Tiefe der Schweißnaht auf Fehler ermöglicht, so auch hinsichtlich oberflächennaher und rückwandnaher Schäden in der Schweißnaht, wie zum Beispiel Wurzelkerben, die bei dem herkömmlichen Verfahren erst bei einem gewissen Abstand von der Oberfläche oder der Rückwand zu detektieren wären.

In den beigefügten Figuren ist eine bevorzugte Ausführungsform der erfindungsgemäßen Vorrichtung dargestellt, ohne die Erfindung darauf zu beschränken, wobei

Figur 1    eine schematische Darstellung der TOFD-Technik ist, wie sie aus dem Stand der Technik bekannt ist und von der erfindungsgemäß auch Gebrauch gemacht wird;

Figur 2    ein Schnittbild durch einen Rollenprüfkopf ist;

Figur 3    ein Schnittbild durch einen Achskörper entlang der Schnittlinie IV- IV in Fig. 5, mit eingesetztem Ultraschallerzeuger (Schwinger) und Vorlaufkörper eines Rollenprüfkopfes gemäß Figur 2 ist;

Figur 4    eine Ansicht, teilweise schnittbildlich, in Axialrichtung der Baugruppe gemäß Figur 3; und

Figur 5    eine Draufsicht auf die Baugruppe gemäß Figur 3 ist.

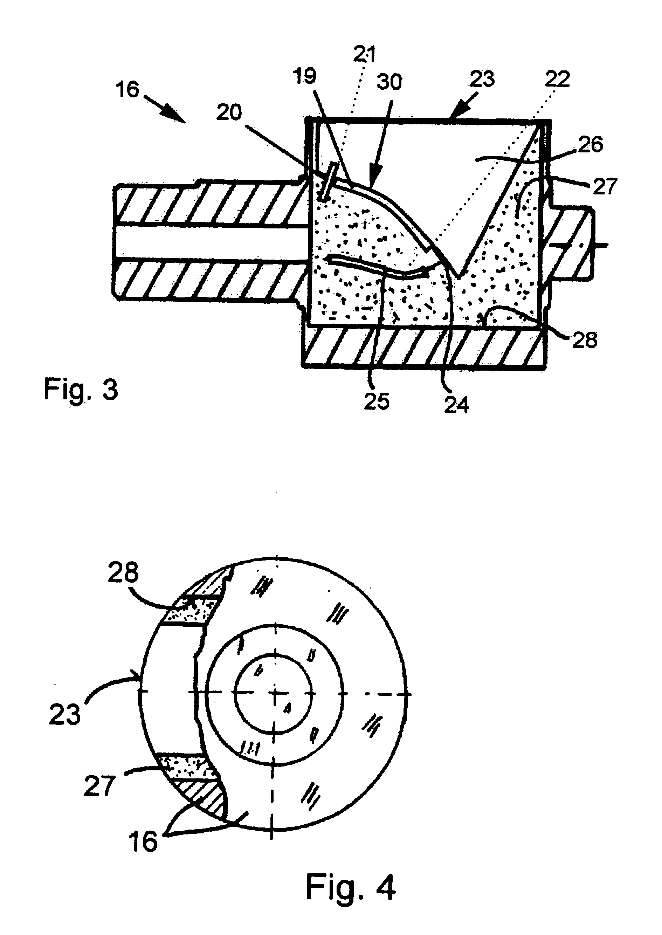

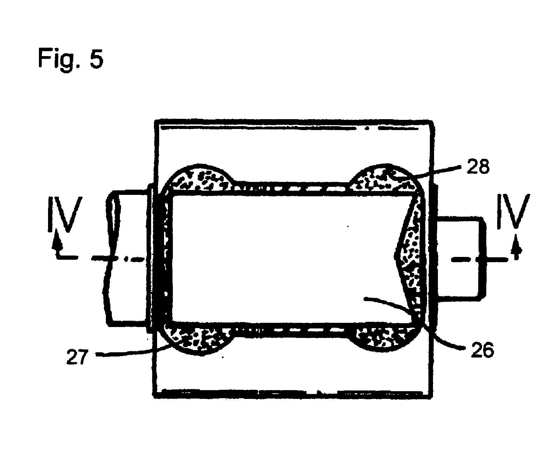

Wie die Fig. 2 und 3 zeigen weist der Rollenprüfkopf, in den der erfindungsgemäß ausgestaltete Ultraschallsender 19 integriert ist, einen Achskörper 16 auf, der mit seinem in den Figuren rechten Endbereich in der zugehörigen Haltevorrichtung, hier 17, festgelegt ist. Dadurch ist der Achskörper 16 drehstarr mit der Haltevorrichtung 17 verbunden. Der Achskörper 16 des Rollenprüfkopfs 100 definiert eine erste Achslinie, die parallel zur Oberfläche des Prüflings verläuft. Wie insbesondere die Fig. 3 und 5 zeigen, hat der Achskörper 17 eine relativ große Ausnehmung 28. Sie hat im Wesentlichen die Form eines Quaders, der von einer Mantelfläche radial nach innen eingearbeitet ist und sich fast über den gesamten Durchmesser des mittleren Zylinderstücks des Achskörpers 16 erstreckt. In der Ausnehmung 28 befindet sich ein im Wesentlichen keilförmiger Vorlaufkörper 26. Er ist so eingepasst und bearbeitet, dass seine außen sichtbare Mantelfläche 23 exakt auf dem Zylindermantel liegt, der den Achskörper 16 begrenzt. Dies ist aus Fig. 4 ersichtlich. Auf einer Ankoppelfläche des Vorlaufkörpers 26 ist ein piezoelektrischer Kompositschwinger als Ultraschallsender 19 aufgeklebt. Ein in den Vorlaufkörper 26 eingesetztes Anschlagelement 20 erleichtert die genaue Positionierung des Ultraschallsenders 19 beim Aufkleben auf den Vorlaufkörper 26. Neben dem Ultraschallsender 19 ist auf dieselbe Fläche des Vorlaufkörpers 26 ein Lötstützpunkt 24 aufgeklebt, an ihn sind die Elektroden des Ultraschallsenders 19 und die Anschlussleitungen 25 angeschlossen. Der Ultraschallsender 19 ist plattenförmig und in einer in der Zeichnungsebene der Fig. 3 liegenden Richtung gekrümmt, dadurch ist der Ultraschallsender im Bereich der an den Vorlaufkörper angrenzenden Abstrahlfläche 30 (die dem Prüfling zugewandt ist) konvex gekrümmt. In der senkrecht zur Zeichnungsebene der Fig. 3 verlaufenden Richtung ist der Ultraschallsender 19 bzw. dessen Abstrahlfläche 30 nicht gekrümmt. Durch die in der Zeichenebene der Figur 3 liegende, konvexe Krümmung wird ein divergentes Ultraschallfeld abgestrahlt, das in etwa durch die divergierenden Randstrahlen 21 und 22 der Figur 3 begrenzt wird. Der Vorlaufkörper 26 hat eine V-förmige Nut, die in Fig. 5 zu erkennen ist. Durch sie werden Reflexionen im Vorlaufkörper 26 unterdrückt. Der Vorlaufkörper 26 ist aus Plexiglas® gefertigt.

Der Vorlaufkörper 26 mit dem Ultraschallsender 19 und den weiteren Teilen ist mittels einer Masse 27 in der Ausnehmung 28 eingebettet. Diese Masse hat stark absorbierende Eigenschaften und vermeidet, dass der Ultraschallschwinger 19 an den Achskörper 16 angekoppelt wird. Insbesondere soll der nach rückwärts abgesandte Impuls des Ultraschallsenders 19 gedämpft werden und damit ohne Wirkung sein. Die Masse 27 wird gegossen und erstarrt anschließend. Sie besteht vorzugsweise aus einem Kunststoff, der in bekannter Weise mit kleineren Bestandteilen, beispielsweise Metallpartikeln, vermischt ist. In die Masse 27 sind auch die Anschlussleitungen 25 eingebettet. Sie sind durch eine zentrale Bohrung und ein Fenster geführt, so dass sie in einem hohlen Innenraum der Haltevorrichtung 17 weitergeführt werden können.

Wie insbesondere Fig. 4 zeigt, ist auch die Masse 27 oberflächlich so begrenzt, dass sie auf dem Zylindermantel des Achskörpers 16 liegt. Insgesamt ist daher der Achskörper 16 mit seiner gefüllten Ausnehmung 28 nach außen hin ein (so gut wie es geht) idealer Zylinder. Links und rechts des Hauptbereichs, in dem sich die Ausnehmung 28 befindet, des Achskörpers 16 befinden sich konzentrische Stutzen des Achskörpers 16, auf sie sind Kugellager 12, 15 aufgebracht. An diesen wiederum ist ein Käfig drehbar gelagert, der von einer endseitigen Kappe 11 aus Acryl und einem mehr becherförmigen Umgreifteil 14 aus Acryl gebildet wird. Er bildet eine Felge und ist nach außen hin dicht abgeschlossen, bildet also eine innere, flüssigkeitsdichte Kammer. Das Umgreifteil 14 steht in sehr enger Nachbarschaft zum Hauptbereich des Achskörpers 16, es wird hier ein schmaler rohrförmiger Spalt freigelassen. Seine Radialabmessung ist möglichst klein, liegt z.B. unter 1 mm. Dieser Spalt und der restliche Innenraum sind mit einer Ankoppelflüssigkeit gefüllt, beispielsweise Öl oder Glycerin. Sie kann am Ort einer Füllschraube 13 eingebracht werden.

Auf der Felge ist ein Reifen 18 angeordnet, er hat die Form eines Rohrabschnittes und ist aus einem weichen, gummiartigen Material gefertigt und dient der Einkopplung des aus dem Vorlaufkörper austretenden Ultraschallfeldes in den Prüfling. Hier kommen insbesondere Polyurethan, natürliches oder künstliches Gummi in Frage. Die Shorehärte liegt zwischen 10 und 40, vorzugsweise bei 25 - 30. Das Material ist ähnlich einem Radiergummi. Wichtig ist eine gleichbleibende Dicke des Reifens 18 über den gesamten Umfang.

Der Ultraschallempfänger ist in einer besonderen Ausgestaltung genau wie der Ultraschallsender ausgestaltet und in einen gleichermaßen gestalteten Rollenprüfkopf integriert.

**Patentansprüche**

1. Vorrichtung zur zerstörungsfreien Ultraschallprüfung eines Prüflings (3), umfassend:

   a. wenigstens einen Ultraschallsender (1, 19) mit wenigstens einer dem Prüfling zugewandten Abstrahlfläche (18, 30) zur Erzeugung eines den Prüfling (3) wenigstens teilweise durchdringenden Ultraschallfeldes,
   b. wenigstens einen Ultraschallempfänger (2) zur wenigstens teilweisen Erfassung des Ultraschallfeldes und zur Umwandlung in ein elektrisches Messsignal,
   c. eine Auswerteinheit zur Auswertung des Messsignals in TOFD-Technik (=time-of-flight-difFraction-Technik),
   **dadurch gekennzeichnet, dass**
   d. der Ultraschallsender (1, 19) in dem durch die Abstrahlfläche (18, 30) vorgegebenen Bereich in wenigstens einer ersten Richtung konvex gekrümmt ist;
   e. ein Vorlaufkörper (26) vorgesehen ist, der an die Abstrahlfläche (18, 30) angekoppelt ist und über den das Ultraschall feld in den Prüfling (3) eindringt und der Vorlaufkörper (26) im Bereich der Abstrahlfläche (18, 30) zu dieser komplementär ausgestaltet ist;
   f. dass der Ultraschallsender (1,19) eine piezoelektrische Polyvinyldifluoridfolie oder ein piezoelektrisches Kompositmaterial aufweist.

**2.** Vorrichtung zur zerstörungsfreien Ultraschallprüfung eines Prüflings (3) gemäß dem vorhergehenden Anspruch, dadurch gekennzeichnet, dass der Ultraschallsender (1, 19) in dem durch die Abstrahlfläche (18, 30) vorgegebenen Bereich in einer zur ersten Richtung senkrechten, zweiten Richtung nicht gekrümmt oder konkav gekrümmt ist.

**3.** Vorrichtung zur zerstörungsfreien Ultraschallprüfung eines Prüflings (3) gemäß dem vorhergehenden Anspruch, **dadurch gekennzeichnet, dass** die Abstrahlfläche (30) so angeordnet ist, dass die zweite Richtung parallel zur Oberfläche des Prüflings (3) ist.

**4.** Vorrichtung zur zerstörungsfreien Ultraschallprüfung eines Prüflings (3) gemäß dem vorhergehenden Anspruch, **dadurch gekennzeichnet, dass** die Abstrahlfläche (18, 30) so angeordnet ist, dass die erste Richtung zur Oberfläche des Prüflings (3) geneigt ist.

**5.** Vorrichtung zur zerstörungsfreien Ultraschallprüfung eines Prüflings (3) gemäß einem der vorhergehenden Ansprüche, **dadurch gekennzeichnet, dass** der Ultraschallsender (1, 19) im Wesentlichen als eine in wenigstens eine Richtung gekrümmte Platte ausgebildet ist.

**6.** Vorrichtung zur zerstörungsfreien Ultraschallprüfung eines Prüflings (3) gemäß einem der vorhergehenden Ansprüche, **dadurch gekennzeichnet, dass** der Ultraschallsender (1, 19) in einen Winkelprüfkopf oder einen Rollenprüfkopf (100) eingebaut ist.

**7.** Vorrichtung zur zerstörungsfreien Ultraschallprüfung eines Prüflings (3) gemäß einem der vorhergehenden Ansprüche, **dadurch gekennzeichnet, dass** der Vorlaufkörper (26) aus Acrylat, bevorzugt Methacrylat, beispielsweise aus Plexiglas® ist.

**8.** Verfahren zur zerstörungsfreien Ultraschallprüfung eines Prüflings mit der Vorrichtung gemäß einem der vorhergehenden Ansprüche, wobei das Verfahren umfasst:

a. Erzeugen eines den Prüfling wenigstens teilweise durchdringenden Ultraschallfeldes mittels zumindest eines Ultraschallsenders (1,19) mit einer dem Prüfling (3), zugewandten Abstrahlfläche (18,30),
b. wenigstens teilweises Erfassen des Ultraschallfeldes und Umwandeln in ein elektrisches Messsignal mittels wenigstens eines Ultraschallempfängers (2),
c. Auswerten des Messsignals in TOFD-Technik (=time-of-flight-diffraction-Technik) mittels einer Auswerteinheit,

**dadurch gekennzeichnet, dass**

d. zur Erzeugung des Ultraschallfeldes die Abstrahlfläche (18,30) in wenigstens eine Richtung konvex gekrümmt ist, oder die Abstrahlflächen (18,30) eine in wenigstens eine Richtung konvex gekrümmte Fläche definieren
e. dass das Ultraschallfeld über einen an die Abstrahlfläche (18, 30) angekoppelten Vorlaufkörper (26), in den Prüfling (3) eindringt, wobei der Vorlaufkörper (26) im Bereich der Abstrahlfläche (18, 30) zu dieser komplementär ausgestaltet ist;
f. dass das Ultraschallfeld mittels einer piezoelektrischen Polyvinyldifluoridfolie oder eines piezoelektrischen Kompositmaterials erzeugt wird.

**9.** Verfahren zur zerstörungsfreien Ultraschallprüfung eines Prüflings (3) gemäß dem vorhergehenden Anspruch, **dadurch gekennzeichnet, dass** das Verfahren unter Bewegung wenigstens des Ultraschallsenders (1,19), bevorzugt unter simultaner Bewegung des Ultraschallsenders (1,19) und des Ultraschallempfänger (2), entlang des Prüftings (3) durchgeführt wird.

**10.** Verfahren zur zerstörungsfreien Ultraschallprüfung eines Prüflings gemäß einem der vorhergehenden Ansprüche 8 oder 9, **dadurch gekennzeichnet, dass** eine im Prüfling (3) vorgesehene Schweißnaht geprüft wird.

**Claims**

**1.** Device for the non-destructive ultrasound testing of a test object (3), comprising:

a. at least one ultrasound transmitter (1, 19) with at least one emitting surface (18, 30) facing towards the test object for generating an ultrasonic field penetrating the test object (3) at least partially,
b. at least one ultrasound receiver (2) for the at least partial detection of the ultrasonic field and for the conversion into an electrical measurement signal,
c. an evaluation unit for evaluating the measurement signal in TOFD technology (= time of flight diffraction technology),
**characterised in that**
d. the ultrasound transmitter (1, 19), in the area predefined by the emitting surface (18, 30), is convexly curved in at least one direction;
e. a leading body (26) is provided which is coupled to the emitting surface (18, 30) and through which the ultrasonic field enters into the test object (3), and the leading body (26), in the area of the emitting surface (18, 30) is configured to be complementary thereto;

f. that the ultrasound transmitter (1, 19) comprises a piezo-electric polyvinyldifluoride sheet or a piezo-electric composite material.

**2.** Device for the non-destructive ultrasound testing of a test object (3) according to the preceding claim, **characterised in that** the ultrasound transmitter (1, 19), in the area predefined by the emitting surface (18, 30), is not curved or concavely curved in a second direction perpendicular to the first direction.

**3.** Device for the non-destructive ultrasound testing of a test object (3) according to the preceding claim, **characterised in that** the emitting surface (18, 30) is disposed in such a way that the second direction is parallel to the surface of the test object (3).

**4.** Device for the non-destructive ultrasound testing of a test object (3) according to the preceding claim, **characterised in that** the emitting surface (18, 30) is disposed in such a way that the first direction is inclined to the surface of the test object (3).

**5.** Device for the non-destructive ultrasound testing of a test object (3) according to any one of the preceding claims, **characterised in that** the ultrasound transmitter (1, 19) is substantially configured as a plate which is curved in at least one direction.

**6.** Device for the non-destructive ultrasound testing of a test object (3) according to any one of the preceding claims, **characterised in that** the ultrasound transmitter (1, 19) is built into an angle test probe or a roller test probe (100).

**7.** Device for the non-destructive ultrasound testing of a test object (3) according to any one of the preceding claims, **characterised in that** the leading body (26) consists of acrylate, preferably methacrylate, for example plexiglass®.

**8.** Method for the non-destructive ultrasound testing of a test object with the device according to any one of the preceding claims, the method comprising:

a. generating an ultrasonic field penetrating the test object at least partially by means of at least one ultrasound transmitter (1, 19) with an emitting surface (18, 30) facing towards the test object (3),

b. at least partial detection of the ultrasonic field and conversion into an electrical measurement signal by means of at least one ultrasound receiver (2),

c. evaluation of the measurement signal in TOFD technology (=time of flight diffraction technology) by means of an evaluation unit, **characterised in that**

d. for generating the ultrasonic field, the emitting surface (18, 30) is convexly curved in at least one direction, or the emitting surfaces (18, 30) define a surface that is convexly curved in at least one direction,

e. that the ultrasonic field enters into the test object (3) through a leading body (26) coupled to the emitting surface (18, 30), the leading body (26), in the area of the emitting surface (18, 30) being configured to be complementary thereto;

f. that the ultrasonic field is generated by means of a piezo-electric polyvinyldifluoride sheet or a piezo-electric composite material.

**9.** Method for the non-destructive ultrasound testing of a test object (3) according to the preceding claim, **characterised in that** the method is carried out while moving at least the ultrasound transmitter (1, 19), preferably while simultaneously moving the ultrasound transmitter (1, 19) and the ultrasound receiver (2), along the test object (3).

**10.** Method for the non-destructive ultrasound testing of a test object according to any one of the preceding claims 8 or 9, **characterised in that** a welding seam provided in the test object (3) is tested.

**Revendications**

**1.** Dispositif de contrôle non destructif par ultrasons d'un échantillon (3), comprenant :

a. au moins un émetteur d'ultrasons (1, 19) ayant au moins une surface émettrice (18, 30) montrant en direction dudit échantillon, pour la génération d'un champ ultrasonore traversant au moins en partie ledit échantillon (3),

b. au moins un récepteur d'ultrasons (2) pour la réception au moins partielle dudit champ ultrasonore et pour la conversion en un signal électrique de mesure,

c. une unité d'évaluation pour évaluer ledit signal de mesure selon la technique TOFD (= time-of-flight-diffraction ou technique de diffraction en temps de vol),

**caractérisé par le fait que**

d. dans la zone donnée par la surface émettrice (18, 30), ledit émetteur d'ultrasons (1, 19) est courbé de façon convexe dans au moins une première direction,

e. un corps de contact (26) est prévu qui est couplé à ladite surface émettrice (18, 30) et par lequel le champ ultrasonore pénètre dans ledit échantillon (3), et que ledit corps de contact (26) est réalisé, au niveau de la surface émettrice (18, 30), de façon complémentaire à celle-ci,

f. que ledit émetteur d'ultrasons (1, 19) comprend une feuille piézoélectrique en difluorure de polyvinyle ou un matériau composite piézoélectrique.

2. Dispositif de contrôle non destructif par ultrasons d'un échantillon (3), selon la revendication précédente, **caractérisé par le fait que**, dans la zone donnée par ladite surface émettrice (18, 30), ledit émetteur d'ultrasons (1, 19) n'est pas courbé ou est courbé de façon concave dans une deuxième direction perpendiculaire à ladite première direction.

3. Dispositif de contrôle non destructif par ultrasons d'un échantillon (3), selon la revendication précédente, **caractérisé par le fait que** ladite surface émettrice (30) est agencée de telle façon que la deuxième direction soit parallèle à la surface de l'échantillon (3).

4. Dispositif de contrôle non destructif par ultrasons d'un échantillon (3), selon la revendication précédente, **caractérisé par le fait que** la surface émettrice (18, 30) est agencée de telle façon que ladite première direction soit inclinée par rapport à la surface de l'échantillon (3).

5. Dispositif de contrôle non destructif par ultrasons d'un échantillon (3), selon l'une quelconque des revendications précédentes, **caractérisé par le fait que** ledit émetteur d'ultrasons (1, 19) est réalisé pour l'essentiel comme une plaque courbée dans au moins une direction.

6. Dispositif de contrôle non destructif par ultrasons d'un échantillon (3), selon l'une quelconque des revendications précédentes, **caractérisé par le fait que** ledit émetteur d'ultrasons (1, 19) est intégré à un palpeur d'angle ou à un palpeur à rouleau (100).

7. Dispositif de contrôle non destructif par ultrasons d'un échantillon (3), selon l'une quelconque des revendications précédentes, **caractérisé par le fait que** ledit corps de contact (26) est réalisé en acrylate, de préférence en méthacrylate, par exemple en plexiglas®.

8. Procédé de contrôle non destructif par ultrasons d'un échantillon au moyen du dispositif selon l'une quelconque des revendications précédentes, ledit procédé comprenant :

a. la génération d'un champ ultrasonore traversant au moins en partie ledit échantillon, au moyen d'au moins un émetteur d'ultrasons (1, 19) ayant une surface émettrice (18, 30) montrant en direction dudit échantillon (3),

b. la réception au moins partielle dudit champ ultrasonore et la conversion en un signal électrique de mesure au moyen d'au moins un récepteur d'ultrasons (2),

c. l'évaluation dudit signal de mesure selon la technique TOFD (= time-of-flight-diffraction ou technique de diffraction en temps de vol), au moyen d'une unité d'évaluation,

**caractérisé par le fait que**

d. pour générer ledit champ ultrasonore, la surface émettrice (18, 30) est courbée de façon convexe dans au moins une direction, ou les surfaces émettrices (18, 30) définissent une surface courbée de façon convexe dans au moins une direction,

e. que ledit champ ultrasonore pénètre dans ledit échantillon (3) via un corps de contact (26) couplé à la surface émettrice (18, 30), ledit corps de contact (26) étant réalisé, au niveau de la surface émettrice (18, 30), de façon complémentaire à celle-ci,

f. que ledit champ ultrasonore est généré au moyen d'une feuille piézoélectrique en difluorure de polyvinyle ou d'un matériau composite piézoélectrique.

9. Procédé de contrôle non destructif par ultrasons d'un échantillon (3), selon la revendication précédente, **caractérisé par le fait que** le procédé est mis en oeuvre en déplaçant au moins ledit émetteur d'ultrasons (1, 19), de préférence en déplaçant simultanément ledit émetteur d'ultrasons (1, 19) et ledit récepteur d'ultrasons (2) le long de l'échantillon (3).

10. Procédé de contrôle non destructif par ultrasons d'un échantillon, selon l'une quelconque des revendications précédentes 8 ou 9, **caractérisé par le fait que** l'on contrôle une soudure prévue dans ledit échantillon (3).

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- NL 1032186 C
- DE 10062722 A1